# DEMANDE DE BREVET EUROPEEN

(11) **EP 0 977 327 A1**
(43) Date de publication de la demande: **02.02.2000**
(21) Numéro de dépôt: 99401887.7
(22) Date de dépôt: 23.07.1999
(51) Int. Cl.: H01S 3/1055, G02B 6/42

(54) **Laser en espace libre avec sortie fibre autoalignée**

(30) Priorité: 27.07.1998 FR 9809573
(71) Demandeur: PHOTONETICS, 78160 Marly le Roi (FR)
(72) Inventeur: Lefèvre, Hervé, 75014 Paris (FR)
(74) Mandataire: Le Brusque, Maurice

(57) **Abrégé**

La présente invention concerne un laser en espace libre. Un milieu amplificateur (2), en espace libre, est placé à l'intérieur d'une cavité de Fabry-Perot, deux réflecteurs (3, 4) constituant cette cavité, l'un de ces deux réflecteurs (4) étant partiellement transparent et constituant le miroir de sortie du laser.

Selon l'invention, le miroir de sortie est inséré dans le coeur d'une fibre optique monomode (20) qui constitue une fibre optique de sortie; une lentille (22), placée dans la cavité, assure le couplage dans cette fibre des flux lumineux (25) émis par le milieu amplificateur et le deuxième réflecteur (9) est autoaligné.

Cette configuration est avantageusement utilisée pour réaliser un laser continûment accordable.

## Description

La présente invention concerne un laser en espace libre avec sortie à fibre monomode qui présente donc l'avantage de prendre en compte, par construction, le couplage dans une fibre optique monomode du flux lumineux émis. La structure même de ces lasers permet un autoalignement du flux lumineux émis par le milieu amplificateur en espace libre avec la fibre monomode de sortie. On cumule ainsi les avantages des lasers en espace libre avec ceux des lasers guidés couplés à une fibre amorce et ceux des lasers à fibre.

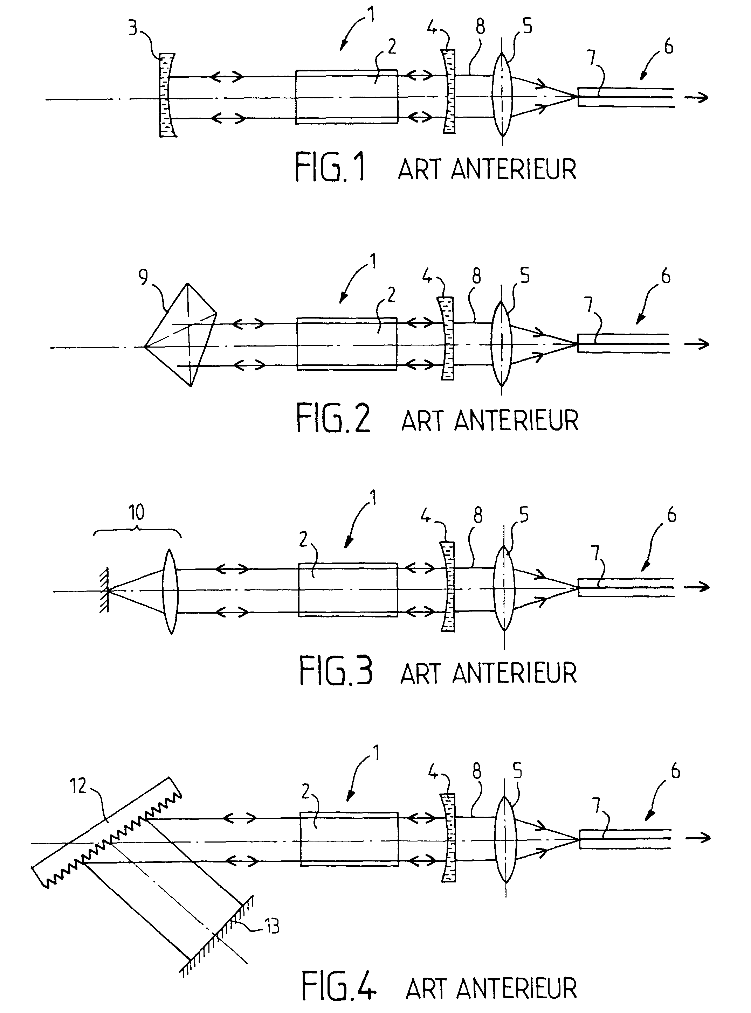

Les lasers 1 en espace libre sont bien connus et se composent d'une cavité Fabry-Perot comportant deux miroirs 3, 4 et un milieu amplificateur 2. Ces lasers en espace libre de l'art antérieur sont schématisés sur la Figure 1.

Afin de permettre l'émission d'un flux lumineux 8, l'un des miroirs 4 est partiellement transparent, et de plus afin d'assurer la stabilité de la résonance de la cavité, l'un des miroirs au moins est concave. En effet, ces lasers en espace libre sont généralement configurés pour émettre sur le mode latéral fondamental non guidé TEM₀₀ qui a une distribution d'intensité transversale de forme gaussienne. Ce mode gaussien du laser peut être couplé très efficacement dans une fibre monomode 6 dont le mode guidé a une forme très proche d'une gaussienne. Pour cela, Il faut utiliser une lentille 5 de focale f telle que le col (ou « waist » en anglais) du faisceau convergent ait la même largeur que le mode guidé de la fibre monomode. La face d'entrée de la fibre est placée dans le plan focal de la lentille, et le coeur 7 de la fibre est centré sur le col du faisceau laser convergent.

Pour améliorer la stabilité de la cavité, il est connu qu'un des miroirs 3 peut être remplacé par un dispositif rétroréfléchissant autoaligné comme un coin de cube 9 ou un oeil de chat 10, respectivement représentés sur les Figures 2 et 3. Dans ce cas, la cavité est toujours optimisée mais la direction du faisceau de sortie 8 est donnée par l'orientation du miroir 4 faisant face au rétroréflecteur autoaligné.

On désigne ici par - rétroréfléchissant autoaligné - un dispositif destiné à recevoir un faisceau incident collimaté et à le renvoyer sous la forme d'un faisceau réfléchi également collimaté, le faisceau réfléchi ayant, au moins au premier ordre, une direction parallèle à celle du faisceau incident, même si le faisceau incident présente un faible écart angulaire par rapport à sa direction d'incidence théorique. C'est le cas en particulier des coins de cube qui sont des trièdres orthogonaux dont les faces intérieures sont réfléchissantes. Le meilleur fonctionnement est obtenu pour un faisceau incident approximativement parallèle à la diagonale du cube dont le trièdre forme un sommet. C'est encore le cas de l'oeil de chat constitué par un miroir plan placé dans le plan focal d'une lentille convergente. Le meilleur fonctionnement est obtenu pour un faisceau incident approximativement parallèle à l'axe de la lentille.

Dans ces lasers en espace libre, on peut aussi remplacer un des miroirs par un système rétroréfléchissant dispersif en longueur d'onde comportant par exemple un réseau de diffraction 12 et un miroir 13 ; cela est représenté sur la Figure 4. Un tel dispositif permet de sélectionner une longueur d'onde spécifique d'émission, et la variation angulaire du système dispersif rétroréfléchissant permet l'obtention d'un laser accordable en longueur d'onde.

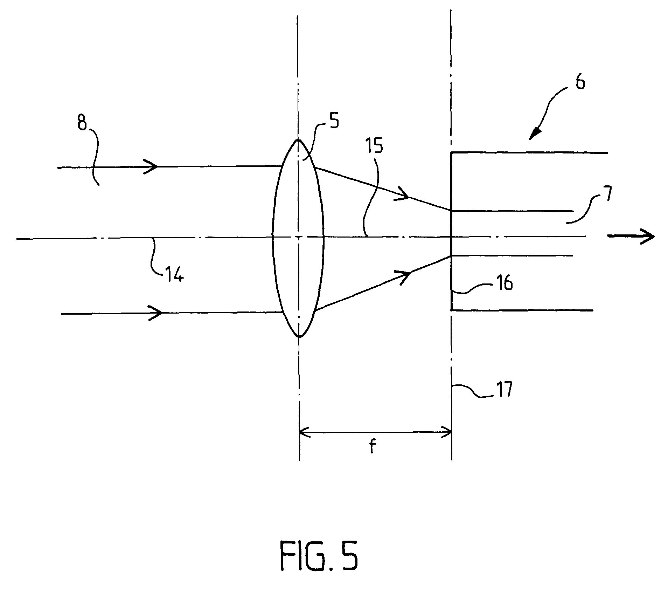

Pour tous ces lasers en espace libre, le faisceau de sortie 8 peut être couplé efficacement dans une fibre 6 monomode si le laser émet aussi dans son mode fondamental TEM₀₀. On sait que les conditions de couplage dans la fibre sont optimales quand l'axe 14 du faisceau laser 8 sortant est aligné avec l'axe 15 défini par le centre de la lentille et le centre du coeur 7 de la fibre, et quand la face de sortie 16 de la fibre est dans le plan focal 17 de la lentille. Cela apparaît par exemple sur la représentation agrandie de la Figure 5.

La stabilité du couplage et donc de la puissance transmise dépend donc, en particulier, de la stabilité de l'axe 15 lentille-coeur mais aussi de l'axe 14 du faisceau laser sortant. Cependant, ce faisceau souffre d'instabilités dues aux instabilités résiduels d'alignement des miroirs du laser. Une stabilisation est possible avec des mécanismes de contre-réaction agissant sur l'orientation des miroirs mais conduisant à un système de complexité importante.

Le but de l'invention est de proposer un laser en espace libre avec une sortie fibre monomode qui est autoalignée pour éliminer ces instabilités.

A cet effet, l'invention concerne donc un laser en espace libre comportant un milieu amplificateur, en espace libre, placé à l'intérieur d'une cavité de Fabry-Perot, deux réflecteurs constituant cette cavité, l'un de ces deux réflecteurs étant partiellement transparent et constituant le miroir de sortie du laser.

Selon l'invention, le miroir de sortie est inséré dans le coeur d'une fibre optique monomode qui constitue une fibre optique de sortie; une lentille, placée dans la cavité, assure le couplage dans cette fibre des flux lumineux émis par le milieu amplificateur et le deuxième réflecteur est autoaligné.

De manière avantageuse, dans différents modes de réalisation présentant chacun des avantages propres et susceptibles d'être combinés :
- le miroir de sortie est un réseau de Bragg photoinscrit dans le coeur de la fibre optique ;
- le réflecteur autoaligné est un coin de cube ;
- le réflecteur autoaligné est un oeil de chat ;
- le laser comporte des moyens permettant de faire varier la longueur d'onde d'émission ;
- le laser comporte des moyens permettant d'assurer la continuité de la variation de la longueur d'onde d'émission ;
- les moyens permettant d'assurer la variation de la longueur d'onde d'émission comportent un réseau fonctionnant dans la configuration de Littman-Metcalf;
- la lentille a une distance frontale nulle ;
- la lentille est à gradient d'indice ;
- le milieu amplificateur présentant des interfaces planes avec l'espace libre, les plans de ces interfaces sont inclinés par rapport à la normale à l'axe du laser.

L'invention sera décrite plus en détail en référence aux dessins dans lesquels :
- la Figure 1 représente la structure traditionnelle d'un laser en espace libre de l'art antérieur , couplé à une fibre;
- la Figure 2 représente la structure traditionnelle d'un laser en espace libre de l'art antérieur stabilisé par un coin de cube et couplé à une fibre;
- la Figure 3 représente la structure traditionnelle d'un laser en espace libre de l'art antérieur stabilisé par un oeil de chat et couplé à une fibre;
- la Figure 4 représente la structure traditionnelle d'un laser en espace libre accordable de l'art antérieur couplé à une fibre;
- la Figure 5 est une représentation agrandie d'un faisceau émis par un laser en espace libre de l'art antérieur et couplé à une fibre ;
- la Figure 6 représente la structure d'un laser selon l'invention ;
- la Figure 7 représente la structure d'un laser accordable selon l'invention ;
- la Figure 8 représente la structure d'un laser accordable avec un réseau de Bragg « chirpé » selon l'invention ;
- la Figure 9 représente la structure d'un laser selon l'invention, équipé de lentilles à frontale nulle.

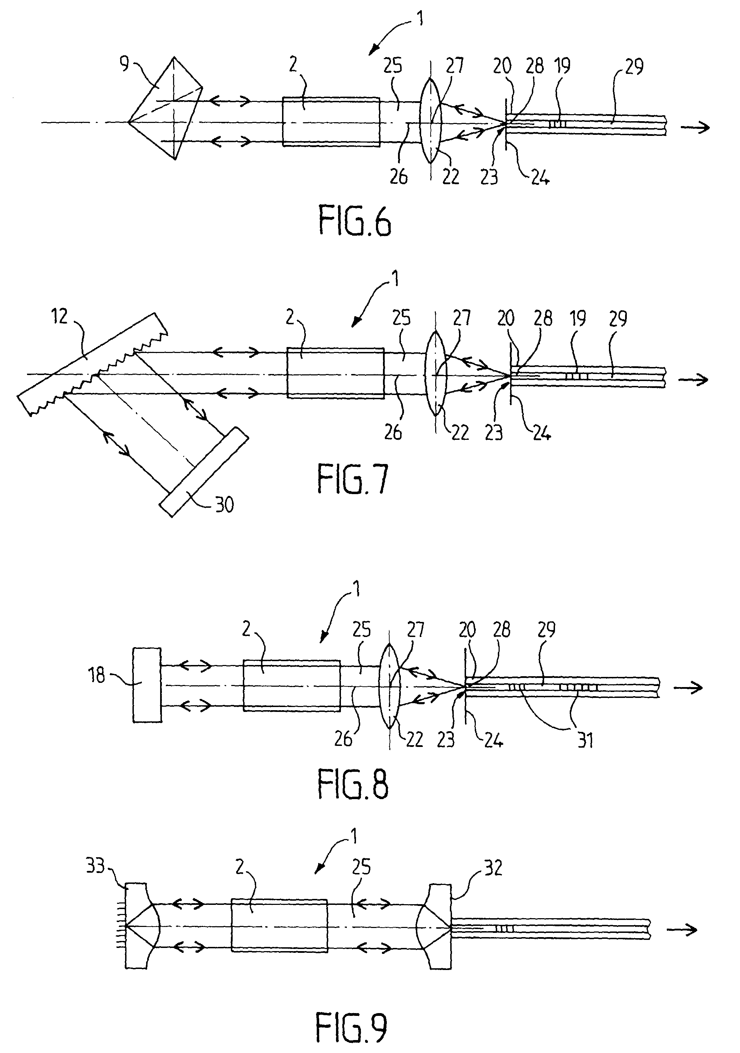

On se référera maintenant aux Figures 6 et suivantes sur lesquelles les éléments analogues à ceux désignés sur les Figures précédentes ont conservé les mêmes références; le laser 1 comporte un milieu amplificateur 2 fonctionnant en espace libre.

On entend ici par - fonctionnement en espace libre - le fait que la propagation n'est pas guidée dans le milieu amplificateur. Cela distingue cette catégorie de lasers, des lasers guidés (lasers semi-conducteurs ou lasers à fibre). Les milieux amplificateurs en espace libre sont très variés et leur technologie est bien maîtrisée.

Le laser 1 comporte également une cavité formée, à l'une de ses extrémités, d'un dispositif rétroréflecteur autoaligné 18. Ce dispositif rétroréflecteur autoaligné 18 peut consister en un coin de cube 9 ou en un oeil de chat, ou encore en tout autre dispositif assurant le renvoi par réflexion d'un rayon lumineux sur lui même. L'autre miroir 19, constituant le miroir de sortie, partiellement transparent, est formé à l'intérieur du coeur 29 d'une fibre monomode 20. Un tel miroir peut être réalisé dans la fibre par différents moyens, mais préférentiellement par photo-inscription d'un réseau de Bragg réfléchissant au voisinage de la longueur d'onde d'émission du laser. Il peut aussi être réalisé par métallisation d'une surface à l'intérieur de la fibre.

La fibre optique monomode 20 dans laquelle est couplé le flux lumineux émis par le laser 1 constitue ainsi sa fibre de sortie.

A l'intérieur de la cavité, une lentille convergente 22 est placée de telle sorte que l'extrémité 23 de la fibre 20 soit dans le plan focal 24 de la lentille 22. Ainsi, le couplage dans la fibre 20 des faisceaux collimatés 25 émis et reçus par le milieu amplificateur 2 est réalisé avec une efficacité maximale. De plus, la distance focale de la lentille 22 est choisie de façon à ce que le faisceau divergent issu de la fibre 20 soit collimaté avec un diamètre optimal pour le fonctionnement du milieu amplificateur

Dans cette configuration, l'axe 26 du faisceau laser 25 dans la cavité est donné par l'axe défini par le centre 27 de la lentille 22 et le centre 28 du coeur 29 de l'extrémité de la fibre monomode 20.

Le réflecteur 18 étant autoaligné (il comporte coin de cube 9 ou oeil de chat), l'axe 26 du faisceau laser 25 est déterminé par l'axe joignant le centre 27 de la lentille 22 au centre 28 du coeur 29 de la fibre 20. Ces deux axes sont ainsi confondus en raison de la structure même du laser. La cavité est toujours optimisée même en présence de défauts d'alignements des composants du laser et le couplage dans la fibre est toujours optimal. L'axe [centre de la lentille-coeur de la fibre] définit toujours l'axe du faisceau laser. On obtient ainsi une plus grande simplicité de réglage initial et une meilleure stabilité de celui ci comparé à ceux des dispositif classiques.

La Figure 7 représente un laser selon l'invention, accordable utilisant un réseau de diffraction 12 et un réflecteur 30 en configuration de Littman-Metcalf, une telle configuration est réalisé en utilisant un réflecteur 30 autoaligné pour la dimension perpendiculaire au plan de dispersion spectrale. Ce réflecteur 30 peut être un coin à une dimension, c'est-à-dire un dièdre orthogonal dont les faces sont intérieurement réfléchissante, ou bien un oeil de chat à une dimension, c'est-à-dire une lentille cylindrique associée à un miroir plan dans son plan focal. Une telle disposition permet de sélectionner et de faire varier la longueur d'onde d'émission. Des mouvements convenablement coordonnés du réseau 12 et du réflecteur 30 permettent de faire varier continûment, sans saut de mode la longueur d'onde sélectionnée.

Dans le laser selon l'invention, le miroir 19 inséré dans le coeur de la fibre est un réseau de Bragg photoinscrit. Il peut être à pas continûment variable (« chirpé ») pour élargir le domaine de longueur d'onde pour lequel il se comporte en miroir partiellement réfléchissant, et donc le domaine spectral de fonctionnement du laser.

Dans le cas d'un laser accordable où la cavité reste de longueur constante, quand la longueur d'onde est changée, le réseau 31 à pas variable (chirpé) peut être optimisé pour assurer l'accordabilité continue, les longueurs d'onde courtes λ étant réfléchies au début du réseau et celles plus longues λ' étant réfléchies plus loin, en assurant que le ratio longueur équivalente de cavité sur longueur d'onde reste constant (Figure 8). Ceci est particulièrement bien adapté au cas où le dispositif de sélection et d'accordabilité en longueur d'onde est un interféromètre de Fabry-Perot passif placé à l'intérieur de la cavité.

Dans le mode de réalisation de la Figure 9, les lentilles, respectivement 32 et 33, utilisées pour le couplage dans la fibre et pour l'oeil de chat, ont une distance frontale nulle, de façon à éviter la propagation en espace libre de la lumière quand elle est focalisée. En effet, la densité lumineuse est alors très grande et des poussières de l'espace libre pourraient entraîner des dégradations. De telles lentilles peuvent être par exemple des lentilles à gradient d'indice.

Les différentes interfaces intracavité, par exemple celles délimitant le milieu amplificateur 2 ou l'extrémité de la fibre, sont avantageusement traitées antireflet et/ou inclinées pour éviter les rétroréflexions qui créeraient des sous-cavités parasites.

Lorsque l'on cherche à produire un flux lumineux de puissance élevée, la concentration d'énergie au niveau de la face d'entrée 23 de la fibre 20 peut être elle-même élevée et elle risque d'être endommagée. On peut éviter cette difficulté en mettant en oeuvre des moyens d'agrandissement du mode de la fibre. Celle-ci peut, en particulier, avoir un coeur conique dont l'extrémité élargie assure la répartition de l'énergie sur une surface plus étendue.

Par ailleurs, afin d'éviter les effets néfastes de réflexions parasites sur la face d'entrée 23 de la fibre 20, celle-ci peut être inclinée par rapport à l'axe de la cavité.

L'invention a été décrite avec une fibre optique monomode mais elle pourrait être réalisée avec tout type de guide optique monomode.

Dans le cas d'un milieu amplificateur pompé optiquement, le faisceau de pompe peut être envoyé dans le milieu via le réflecteur 9 qui serait alors traité pour transmettre la pompe et réfléchir l'onde émise.

## Revendications

1. Laser en espace libre comportant un milieu amplificateur (2), en espace libre, placé à l'intérieur d'une cavité de Fabry-Perot, deux réflecteurs (3, 4) constituant cette cavité, l'un de ces deux réflecteurs (4) étant partiellement transparent et constituant le miroir de sortie du laser,
caractérisé en ce que le miroir de sortie est inséré dans le coeur d'une fibre optique monomode (20) qui constitue une fibre optique de sortie, qu'une lentille (22), placée dans la cavité, assure le couplage dans cette fibre des flux lumineux (25) émis par le milieu amplificateur et que le deuxième réflecteur (9) est autoaligné.

2. Laser en espace libre selon la revendication 1, caractérisé en ce que le miroir de sortie est un réseau de Bragg photoinscrit dans le coeur de la fibre optique.

3. Laser en espace libre selon l'une des revendications 1 et 2, caractérisé en ce que le réflecteur autoaligné (9) est un coin de cube.

4. Laser en espace libre selon l'une des revendications 1 et 2, caractérisé en ce que le réflecteur autoaligné (9) est un oeil de chat.

5. Laser en espace libre selon l'une quelconque des revendications 1 à 4, caractérisé en ce qu'il comporte des moyens (12, 30) permettant de faire varier la longueur d'onde d'émission.

6. Laser en espace libre selon la revendication 5, caractérisé en ce qu'il comporte des moyens permettant d'assurer la continuité de la variation de la longueur d'onde d'émission.

7. Laser en espace libre selon l'une des revendications 5 et 6, caractérisé en ce que les moyens permettant d'assurer la variation de la longueur d'onde d'émission comportent un réseau (12) fonctionnant dans la configuration de Littman-Metcalf.

8. Laser en espace libre selon l'une des revendications 1 à 7, caractérisé en ce que la lentille (32) a une distance frontale nulle.

9. Laser en espace libre selon la revendication 8, caractérisé en ce que la lentille est à gradient d'indice.

10. Laser en espace libre selon l'une des revendications 1 à 10, caractérisé en ce que le milieu amplificateur (2) présentant des interfaces planes avec l'espace libre, les plans de ces interfaces sont inclinés par rapport à la normale à l'axe du laser.
